# EUROPEAN PATENT APPLICATION

(11) **EP 0 967 779 A2**
(43) Date of publication of application: **29.12.1999**
(21) Application number: 99304663.0
(22) Date of filing: 15.06.1999
(51) Int. Cl.: H04N 1/00, H04N 1/32

(54) **Facsimile routing using internet rpotocol addressing**

(30) Priority: 22.06.1998 US 102249
(71) Applicant: LUCENT TECHNOLOGIES INC., Murray Hill, New Jersey 07974-0636 (US)
(72) Inventor: Naqvi, Shamim A., Morristown, New Jersey 07960 (US)
(74) Representative: Buckley, Christopher Simon Thirsk

(57) **Abstract**

An IP facsimile technique establishes a real-time IP connection for facsimile transmissions without the use of dedicated facsimile servers. A receiving facsimile device converts a given destination address, e.g., a electronic mail address and/or a telephone number, into a particular IP address associated with a sending facsimile device and utilizing the IP address establishes a direct IP connection between the sending and receiving locations for transmitting the facsimile message. Advantageously, the IP facsimile communication is made without requiring intermediate message conversions, i.e., hops, and does not require a dedicated facsimile server located in close proximity to the receiving destination.

## Description

### Field of the Invention

The present invention relates to facsimile communications and, more particularly, to a technique for routing facsimiles using Internet Protocol addressing.

### Background of the Invention

The exchange of communications by facsimile (alternatively referred to in the art in short as "fax") has become an important communications vehicle in many areas, particularly, in business communications where printed documents are sent by facsimile from point to point virtually instantaneously. Thus, time delays associated with other forms of sending important documents, e.g., the postal service, are avoided. A significant amount of facsimile traffic is carried across well-known public switched telephone networks ("PSTN".) One of the main communications cost components of PSTN carried facsimile traffic is the cost of the call in connecting the calling party with the called party. That is, the calling party using, e.g., a facsimile machine, will attempt to send a facsimile by establishing in a well-known manner a connection across the PSTN to the called party's facsimile machine. The cost of establishing such a connection is typically associated with either a local call carried by the well-known local loop or a long distance call which requires a combination of the local loop and an inter-change network ("IXC".)

For example, a typical IXC includes, *inter alia,* a plurality of toll switches that are connected to a number of other switches via a so-called inter-toll network. Each toll switch may also be connected to multiple central offices ("CO"), i.e., local loops. The operation of such IXC's and CO's is well-known, e.g., as discussed in "Engineering and Operations in the Bell System", Second Edition, Eighth Printing, 1993, and the details of which will not be further discussed herein. In short, a CO is arranged to extend to a corresponding toll switch of a communications network, e.g., IXC, a telephone call originating from a calling party whom has dialed a particular telephone number. The CO is further arranged to extend the call connection to a communications device, e.g., a facsimile machine, associated with the called party which receives the extension of the call from the corresponding toll switch. Thus, a conventional facsimile transmission may have cost components associated with both the local loop portion and long distance portion of the call. Thus, depending upon their facsimile call volumes, subscribers using PSTN's for carrying facsimile transmissions can incur significant calling costs.

One increasingly popular alternative to using the above-described PSTN's for carrying facsimile transmissions is the use of internets and/or intranets. The Internet is a well-known type of internet comprising a worldwide collection of networks which in turn connect an extensive number of subnetworks which contain a variety of resources such as computers, servers, or databases. Basically, the Internet is a complex system of interlinked networks which facilitates communications between a variety of entities such as businesses, government agencies, educational institutions, research institutions and private individuals. Interestingly, no particular entity "owns" the Internet so the cost of utilizing the Internet is primarily a function of the type of physical connection used to access the Internet. As such, the use of the Internet to carry various types of communications traffic, once the exclusive domain of PSTN's, has been increasing due to the significant cost savings available to Internet users.

In particular, the amount of facsimile communications across the Internet is increasing due to the fact that the use of the Intemet to carry such traffic eliminates the need for a conventional long distance call across a IXC to establish the facsimile communication thereby eliminating the associated long distance toll charge for the call. One increasingly popular alternative to using the above-described PSTN's for carrying facsimile transmissions is the use of so-called "Internet Protocol faxing" across internets and/or intranets. As will be appreciated, the Internet Protocol ("IP") is a well-known data communications protocol used extensively in the transfer of communications across the Internet. For example, the IP is used in the transmission of data packets across the Internet, e.g., facsimile messages.

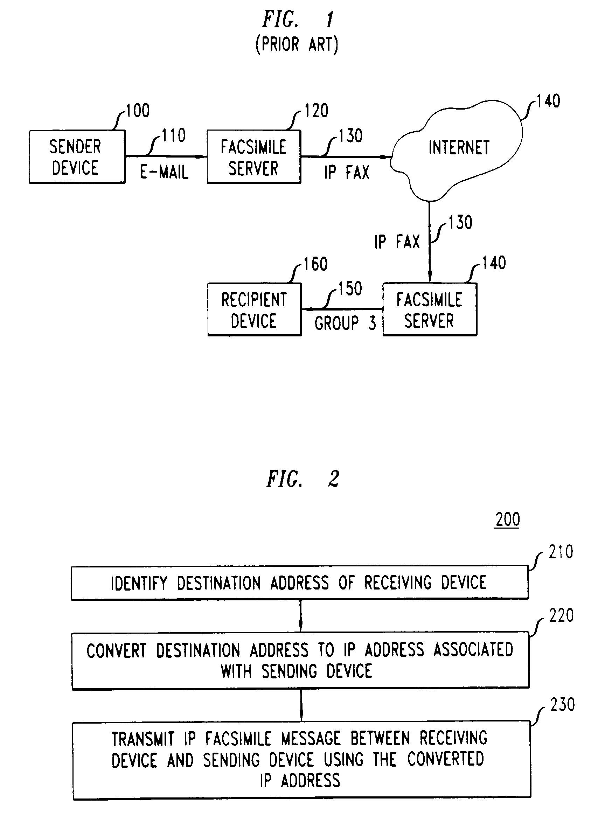

More particularly FIG. 1 shows a conventional IP faxing arrangement for transmitting facsimile communications across the Internet. Sender device 100, e.g., a conventional facsimile machine, receives the facsimile message, e.g., a printed document, from the sender and converts the facsimile message into a conventional electronic mail (alternatively referred to in short in the art and herein as "e-mail") message. This converted e-mail message 110 is transmitted to a dedicated local facsimile server 120 which serves sender device 100 in providing IP faxing capabilities. That is, facsimile server 120 will, in a conventional manner, route an IP fax message 130 using the IP protocol through Internet 140 to another facsimile server 140 which serves recipient device 160. Typically, facsimile server 140 is located in close proximity to the recipient such that the server converts the IP fax message 130 to a conventional Group 3 message 150. As is well-known Group 3 is a facsimile transmission protocol which defines, *inter alia,* a scanning and transmission format for facsimile messages. The Group 3 message 150 is transmitted to recipient device 160, e.g., a conventional fax machine, through the placement of a local telephone call by facsimile server 140 in a conventional manner. Thus, the IP faxing arrangement described above allows for a facsimile server to transmit facsimile messages across the Internet and/or intranets to another facsimile server located is closer proximity to the desired destination location. In this way, the routing of the facsimile message is accomplished without the need for placing a long distance telephone call through a PSTN thereby reducing the cost of sending the facsimile.

Of course, this conventional IP faxing arrangement is not a total panacea in that it also has certain costs and constraints. For example, the above-described arrangement requires dedicated facsimile servers for facilitating the routing of IP facsimile messages between sending and receiving locations. Typically, these facsimile servers serve a large number of users and utilize built-in queues to manage the communications traffic of these users. Thus, as a particular IP facsimile is transmitted from a sender, as described above, the message may be queued at various facsimile servers during the transmission thereby delaying the receipt of the facsimile at the ultimate recipient location. In addition, the IP facsimile transmission may experience several so-called "hops" and/or conversions during the Internet transmission further adding to the delay. As will be appreciated by those skilled in the art a routing "hop" refers to where one server, i.e., router, hands off data to another server from its known routing table. Thus, data routed through the Internet frequently experience hops as transmitted between servers from sender to recipient. Further, the cost effectiveness of eliminating the long distance call is typically only available when a facsimile server is located in close proximity to the recipient which may not always be the case. In addition, as telecommunications providers introduce and increase the availability of so-called "telephone number portability" the identification of a particular server in close proximity to a given phone number, i.e., a communications device, becomes increasingly more difficult.

Therefore, a need exists for a IP faxing technique which obviates the need for dedicated servers in close proximity to sending/receiving locations and reduces the inherent transmission delays associated with a multi-server transmission mechanism.

### Summary of the Invention

The present invention provides a IP facsimile technique which establishes a real-time IP connection for facsimile transmissions without the use of dedicated facsimile servers and reduces the impact of associated transmission delays. In accordance with the invention, a receiving facsimile device directly converts a given destination address, e.g., a electronic mail address, into a particular IP address associated with a sending facsimile device and utilizing the IP address establishes a direct IP connection between the sending and receiving locations for transmitting the facsimile message. Advantageously, in accordance with the invention, the IP facsimile communication is made without requiring intermediate message conversions, i.e., hops, and does not require a dedicated facsimile server located in close proximity to the receiving destination.

In accordance with the preferred embodiment of the invention, a standard telephone number, i.e., a plain old telephone service telephone number ("POTS"), associated with the destination, i.e., the destination address, of a desired facsimile communication is converted by the receiving device, i.e., the called party, into the IP address for a facsimile sending device located at the sender destination, i.e., the calling party, with is capable of sending facsimile messages. In accordance with the preferred embodiment, the IP address conversion is facilitated by first converting the telephone number into an electronic mail address associated with the calling party's facsimile device and using that electronic mail address the IP address of the calling party's facsimile device is determined. Thereafter, in accordance with the invention, a direct IP connection is established, as a function of the converted destination address, between the calling party and called party and a facsimile is transmitted over the IP connection.

### Brief Description of the Drawings

FIG. 1 shows a conventional prior art IP faxing arrangement;
FIG. 2 is a flowchart of illustrative operations for transmitting IP facsimile messages in accordance with the principles of the invention;
FIG. 3 is flowchart of operations of an illustrative embodiment for establishing an IP facsimile connection between a sending and receiving facsimile device in accordance with the invention;
FIG. 4 shows an illustrative embodiment of a facsimile device configured in accordance with the principles of the invention and for implementing the operations of FIG. 2 and FIG. 3;
FIG. 5 shows an illustrative configuration of the facsimile router of FIG. 4 in accordance with the principles of the invention; and
FIG. 6 shows an illustrative communications system configured in accordance with principles of the invention.

Throughout this disclosure, unless otherwise noted, like elements, blocks, components or sections in the figures are denoted by the same reference designations.

### Detailed Description

The present invention provides a IP facsimile technique which establishes a real-time IP connection for facsimile transmissions without the use of dedicated facsimile servers and reduces the impact of associated transmission delays. In accordance with the invention, a receiving facsimile device directly converts a given destination address, e.g., a electronic mail address, into a particular IP address associated with a sending facsimile device and utilizing the IP address establishes a direct IP connection between the sending and receiving locations for transmitting the facsimile message. Advantageously, in accordance with the invention, the IP facsimile communication is made without requiring intermediate message conversions, i.e., hops, and does not require a dedicated facsimile server located in close proximity to the receiving destination.

It should be noted that for clarity of explanation, the illustrative embodiments described herein are presented as comprising individual functional blocks or combinations of functional blocks. The functions these blocks represent may be provided through the use of either shared or dedicated hardware, including, but not limited to, hardware capable of executing software. Illustrative embodiments may comprise digital signal processor ("DSP") hardware and/or software performing the operations discussed below. Further, in the claims hereof any element expressed as a means for performing a specified function is intended to encompass any way of performing that function, including, for example, a) a combination of circuit elements which performs that function; or b) software in any form (including, therefore, firmware, object code, microcode or the like) combined with appropriate circuitry for executing that software to perform the function. The invention defined by such claims resides in the fact that the functionalities provided by the various recited means are combined and brought together in the manner which the claims call for. Applicant thus regards any means which can provide those functionalities as equivalent as those shown herein.

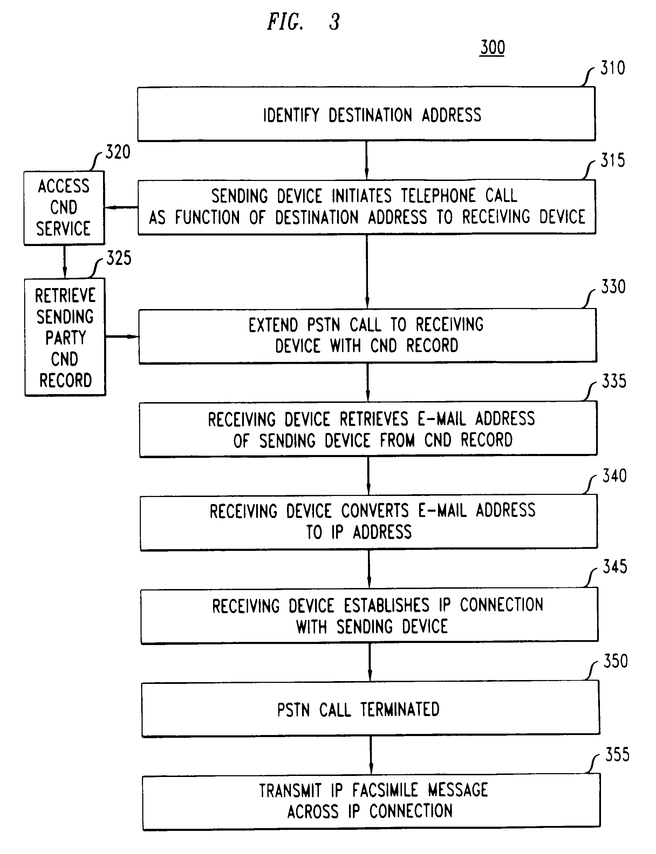

FIG. 2 shows a flowchart of illustrative operations 200 for delivering the various IP facsimile aspects of the invention. In particular, the destination address of the receiving device is identified (block 210) to which the sending device desires to transmit a facsimile message. In accordance with preferred embodiments of the invention, the destination address is expressed in terms of a conventional electronic mail address (e.g., shamim@xyz.com) or a conventional 10 digit POTS telephone number associated with the receiving device. In accordance with the invention, the destination address is converted (block 220) to an IP address associated with the sending device. The details of this conversion are discussed further below with regard to FIG. 3. Once the IP address has been identified in the conversion of the destination address, the IP address is used to establish a direct IP facsimile connection between the sending and receiving device for transmission of the facsimile message (block 230.) Advantageously, in accordance with the invention, the IP facsimile communication is made without requiring intermediate message conversions and does not require a dedicated facsimile server located in close proximity to the receiving destination. Such advantages will be further understood from the detailed discussion which follows.

Turning our attention to FIG. 3, a flowchart of operations 300 is shown of an illustrative embodiment for transmitting an IP facsimile message between a sending and receiving device in accordance with the invention. As described above, the destination address of the receiving device is identified (block 310.) In accordance with the illustrative embodiment of FIG. 3, the destination address of the receiving device is preferably a conventional telephone number useful in establishing a conventional POTS connection. As a function of the identified destination address, the sending device initiates a conventional telephone call (block 315) to the receiving device.

Importantly, I have realized that during the initialization of such a telephone call, e.g., via a conventional PSTN, the so-called Caller Name Delivery ("CND") service can be utilized in the context of my invention to realize the advantageous IP facsimile transmission. That is, CND is a well-known tarriffed service made available by local telephone service providers which supplies the name of the calling party to the called party. Typically, such a service is used by called parties to screen their incoming calls and make a determination of the calling party's identity before deciding to answer the call. The CND service typically stores the name and associated telephone number with CND subscribers in a so-called Line Information Database ("LIDB".) However, I have realized that the CND service can be further extended to capture the electronic mail addresses of subscribers and, in accordance with various embodiments of my invention, the service can be used to supply the stored electronic mail addresses to facilitate the conversion of the destination address to the IP address in accordance with the invention and as further discussed below.

Thus, during the initialization and placement of the telephone call, via a conventional PSTN, access to the CND service is made (block 320) and the sending party's electronic mail address is retrieved (block 325) from their corresponding CND subscriber record. The telephone call is then extended (block 330), in a conventional manner, through the PSTN to the receiving device along with the CND information. The receiving device receives the electronic mail address associated with the sending device (block 335) and converts the sending device's electronic mail address to the IP address of the sending device (block 340.) As is well-known, a conventional electronic mail address is of the form "userid@domain_name", e.g., "shamim@xyz.com", and a conventional IP address which is a 32-bit number typically designated as four decimal numbers between 0-255, separated by "dots", e.g., 137.95.6.23. An electronic mail address is typically associated with an individual user and changes infrequently at the discretion of the user. In contrast, an IP address is typically associated with a physical hardware device, e.g., a personal computer, and is acquired by the hardware device upon first connection to a computer network, e.g., an internet service provider ("ISP") network, for uniquely identifying that particular device. However, if that device is disconnected from its ISP network or is moved to an entirely different network, the IP address for that physical device will most probably change. Thus, ISP's usually maintain a pool of unassigned IP addresses which can be dynamically assigned to physical devices upon first connection and initialization with that ISP's network.

The actual transmission of electronic mail messages is, of course, well-known to those skilled in the art. Briefly, the delivery of electronic mail between two individuals, e.g., "person1" and "person2", having electronic mail addresses, e.g., person1@company1.com and person2@company2.com, respectively, occurs as follows:
1. person1@company1.com transmits an electronic message to person2@company2.com.
2. Person1's electronic mail server, i.e., company1.com, requests from the well-known Domain Name System ("DNS") on the Internet a translation of "company2.com" to the corresponding IP address associated with Person2's electronic mail server.
3. Using the IP address supplied by the DNS, the company1.com server contacts the company2.com server and informs person2's server of its desire to transmit a message for person2.
4. Person2's server acknowledges the request from person1's server and transmission of the message is started.
Of course, as will be readily ascertained from the above description, an IP address solely associated with person2 was never used to complete the message transmission. That is, the only IP addresses used to complete the message transmission were that of person2's server, i.e., company2.com, and person1's server, i.e., company1.com. Thus, the actual message signaling between servers is typically accomplished in real-time whereas the actual delivery of the electronic mail message to person2 may be delayed. For example, all incoming mail to the company2.com server may be placed in a mail queue and later dispersed to the actual recipients at some predefined interval designated by the network administrator.

However, I have realized that the signaling between two servers, e.g., in an electronic mail context as described above, can be enhanced and used to identify an IP address associated directly with a particular person, more particularly, an IP address of a individual hardware device uniquely associated with that individual. In particular, I have recognized that the so-called Expand command ("EXPN") of the well-known Simple Mail Transfer Protocol ("SMTP") can be utilized to identify the IP address of a device, e.g., facsimile device, associated with a particular individual. That is, by automatically creating a user record (hereinafter referred to as the "auto-response record") this feature of conventional electronic mail servers can be utilized to identify the IP address of a individual hardware device uniquely associated with that individual. The auto-response record contains the IP address of the particular device and is periodically updated by the device whenever the device is assigned a new IP address. Thus, in accordance with the preferred embodiment of the invention, when a mail server receives the EXPN command, the mail server in the context of expanding the electronic mail address will return the auto-response record associated with a particular user which will include the IP address.

Advantageously, in accordance with the invention, the identification of such an individualized IP address can facilitate the use of the IP address to establish a direct IP connection between two individual devices thereby eliminating any intermediate hops during the transmission of the message and allowing for the realization of a direct real-time IP connection between the sending and receiving devices. Thus, in accordance with the preferred embodiment of the invention, the IP address of the particular hardware device, e.g., facsimile device, associated with an individual is incorporated into the auto-response record defined by the individual on his electronic mail server. Thereafter, upon activation and initialization of the individual's associated facsimile device, the device transmits a message to the mail server requesting that the auto-response feature be activated for that individual. Thereafter, in accordance with the preferred embodiment of the invention, when an attempt is made to send an electronic message to that individual, an automatic response is generated and transmitted to the other party providing the IP address directly associated with the intended recipient's facsimile device. As will be appreciated, the use of the electronic mail address in accordance with the principles of the invention is one illustrative embodiment for providing the IP faxing aspects of the invention. Other addressing schemes can also be used in further embodiments of the inventions, for example, the so-called Finger protocol. The Finger protocol is a well-known Internet communications protocol which employs an addressing syntax similar in nature to conventional electronic mail addresses and is typically used in UNIX based computer systems for returning the contents of particular user files in response to receiving a Finger command. Thus, the address conversion operations as described above are equally applicable in the conversion of Finger addresses to IP addresses in further embodiments of the invention for transmitting IP facsimile messages.

Turning our attention back to FIG. 3, the receiving device receives the electronic mail address of the sending device and converts the sending device's electronic mail address to its corresponding IP address (block 340) in accordance with the preferred embodiment of the invention as described above. Thereafter, the receiving device, now having identified the IP address of the sending device, establishes a direct IP connection with the sending device (block 345) and further transmits the receiving device's IP address along to the sending device. The original PSTN call is terminated (block 350) by the sender (having never actually been answered, i.e., "off-hook", by the receiving device) and the IP facsimile message is transmitted across the direct IP connection (block 355) established between the sending and receiving device.

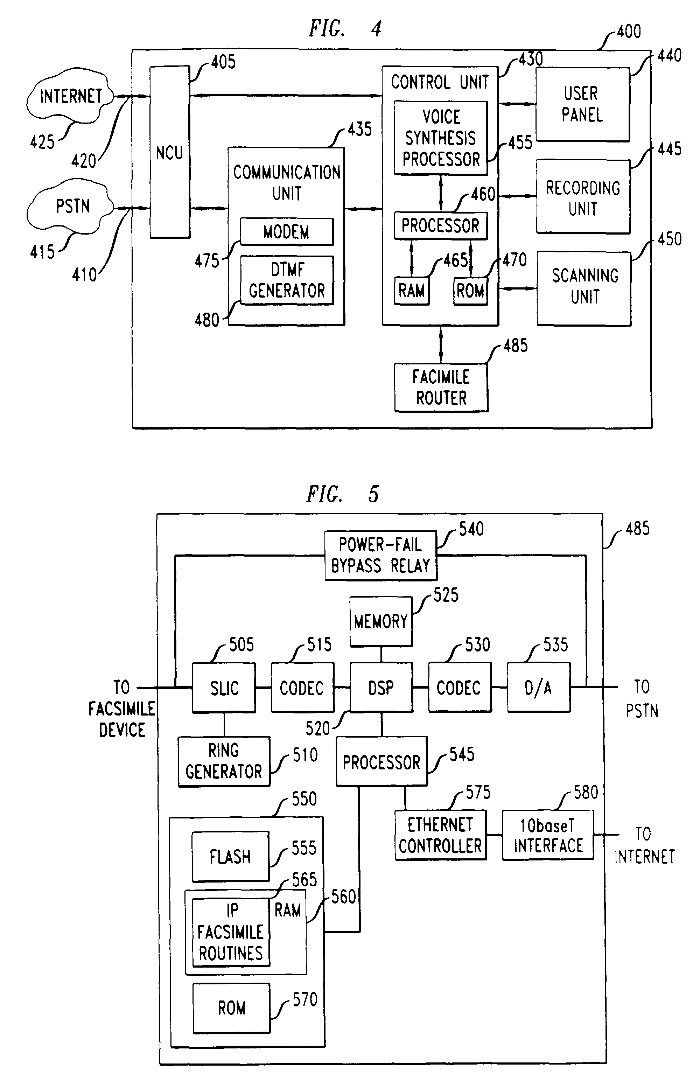

FIG. 4 shows an illustrative embodiment of facsimile device 400 configured in accordance with the principles of the invention. More particularly, Network Control Unit ("NCU") 405 controls in a well-known manner interface 410 to PSTN 415 and interface 420 to Internet 425. That is, NCU 405 enables signaling and voice communications between facsimile device 400 and, PSTN 415 and Internet 425, respectively. Control unit 430 operates, *inter alia,* to control the operation of NCU 405, communication unit 435, user panel 440, recording unit 445, and scanning unit 450. Control unit 430 includes processor 460, random access memory ("RAM") 465, and read only memory ("ROM") 470. Illustratively, RAM 465 and ROM 470 store the instructions and/or programs necessary to perform standard facsimile functions and those necessary to support the various features of the present invention. Control unit 430 also includes voice synthesis processor 455 used to record, store and play back a voice message for particular standard facsimile device features.

Communication unit 435 contains modem 475 and Dual Tone Multi Frequency ("DTMF") generator 480 for facilitating facsimile communications and telephone calls, in a conventional manner, between facsimile device 400 and other communications networks, e.g., PSTN 415. User panel 440 contains, e.g., buttons, switches and the like, and a display which enables the user to operate and input information to facsimile device 400. Recording unit 445 is typically a printer incorporated in facsimile device 400 to generate paper hard copy of the messages received by the device. Scanning unit 450 is used to read in a well-known manner the image of the document to be transmitted by facsimile device 400.

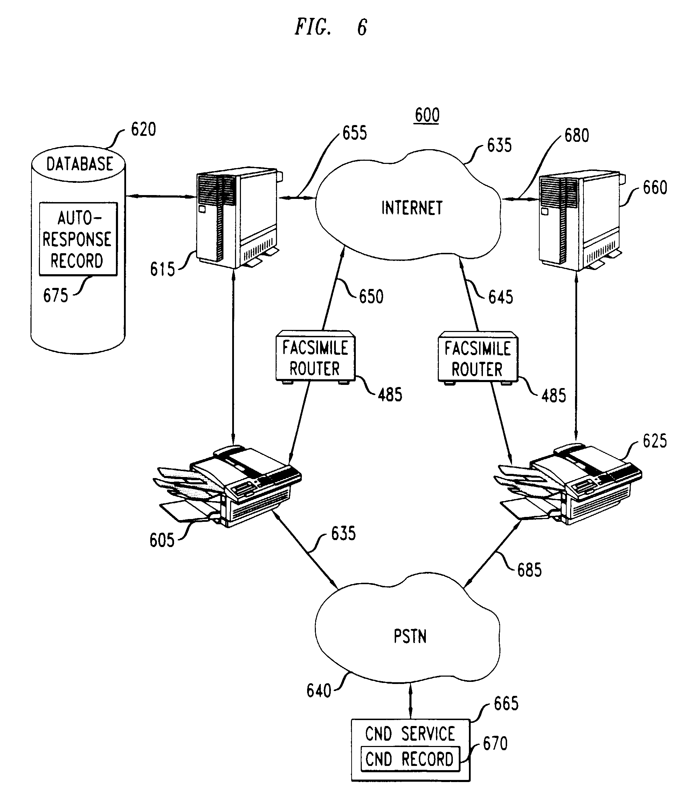

As the basic operations of the aforementioned units of facsimile device 400 are well-known such basic operations will not be further described. However, facsimile device 400 further includes facsimile router 485 which in conjunction with the aforementioned units operates and cooperates to deliver the IP facsimile communication aspects of the present invention. Further, while facsimile router 485 is illustratively shown in FIG. 4 as fully integrated within facsimile device 400 those skilled in the art will readily appreciate other configurations which embody the principles the principle of the invention. For example, the functionality of facsimile router 485 may be delivered by a stand-alone hardware device which is external to facsimile device 400 and coupled to facsimile device 400 (see, e.g., FIG. 6.) Further, alternatively, facsimile device 400 rather than being a stand-alone apparatus as shown in the illustrative embodiment of FIG. 4, may be a facsimile plug-in card used in personal computers for equipping the computer with facsimile capabilities. In such a further embodiment of the invention, facsimile router 485 may be resident directly on the plug-in card or may be a separate plug-in card which operates in cooperation with the facsimile plug-in card, i.e., facsimile device 400. Alternatively, in a further embodiment of the invention, the advantageous features of facsimile router 485 are delivered through a software program executing on a processor, e.g. processor 460, and which can be routinely updated to include additional features useful in the subject facsimile communications.

FIG. 5 shows a more detailed illustrative configuration, in accordance with the principles of the invention, of facsimile router 485 shown in FIG. 4. In particular, facsimile router 485 includes serial line interface card ("SLIC") 505, ring generator 510, codec 515, DSP 520, memory 525, codec 530, digital to analog ("D/A") converter 535, and power-fail bypass relay 540. The individual functionality of the aforementioned components are well-known and will not be discussed in any further detail herein. These components of facsimile router 485 collectively are employed for facsimile signal processing including the routing of facsimile messages across PSTN's and the Internet as described herein. Such facsimile signal processing and overall processing control of facsimile router 485 is through processor 545 which can be illustratively a microprocessor, DSP or the like. Processor 545 includes access to memory 550 which illustratively includes flash memory 555, RAM 560, and ROM 570. RAM 560 stores, *inter alia,* IP facsimile routines 565 which are executed at least by processor 545 for delivering the IP facsimile aspects of the invention. As will be appreciated, IP facsimile routines can be individual executable software programs which are executed by processor 545 for delivering the novel aspects of the invention. For example, the illustrative operations of FIG. 2 and FIG. 3 as described previously may be delivered through the execution of IP facsimile routines 565 for enabling the IP facsimile aspects of the invention. Facsimile router 485 further includes Ethernet controller 575 and l0baseT interface 580 for facilitating the various illustrative communications across the Internet as described herein.

Turning our attention back to the illustrative embodiment of FIG.4, facsimile router 485 working in conjunction with, at a minimum, control unit 430 provides facsimile device 400 with the functionality to deliver the various aspects of the invention including the illustrative operations of the invention as described previously and as shown in FIG. 2 and FIG. 3. For example, facsimile device 400 accepts a facsimile message, e.g., a document, from the user through scanning unit 450. The destination address of the recipient is received by facsimile device 400 as input, e.g., from the user through user panel 440. Thereafter, facsimile router 485 working in conjunction with the aforementioned units of facsimile device 400 delivers the IP facsimile communication aspects of the present invention. More particularly, the identified destination address is converted, by facsimile router 485, to the IP address associated with the receiving device as described above in detail (see, e.g., FIG. 2 and FIG. 3.) Further, facsimile router 485 upon conversion of the destination address to the IP address triggers the transmission of an IP facsimile message across the IP connection which is directly established between the sending and receiving device in accordance the invention. The delivery of such aspects of the invention will be further appreciated from the following discussion of FIG. 6 which shows an illustrative communications system 600 configured in accordance with principles of the invention which illustratively employs facsimile device 400 and facsimile router 485 at the receiving and sending locations.

More particularly, as shown in FIG. 6, communications system 600 includes Internet 635 and PSTN 640 for routing communications traffic, e.g., data communications and telephony communications. Sending facsimile device 605, facsimile router 485, receiving facsimile device 625, and facsimile router 485 are each configured as shown (see, FIG. 5) and described above in regard to facsimile device 400 and facsimile router 485, respectively. As discussed above, FIG. 6 shows the embodiment of the invention where the facsimile router, configured in accordance with the invention, e.g., facsimile router 485, is connected as an external device to the facsimile device, e.g., facsimile device 625. Sending facsimile device 605 has a connection to server 615, e.g., an electronic mail server, which in turn has access to database 620. Thus, a user, i.e., the sender, employing sending facsimile device 605 will supply the materials to be transmitted to the recipient at receiving facsimile device 625. Illustratively, the destination address of the receiver is a conventional POTS telephone number for extending a telephone through PSTN 640. Sending facsimile device 605, in conjunction with facsimile router 485, initiates and extends the call through PSTN 640 as a function of the input destination address. In accordance with the present embodiment, PSTN 640 includes CND service 665 to which the sender subscribes and has previously established CND record 670 which includes the sender's electronic mail address. Thereafter, the call is extended, using communication links 635 and 685, in a conventional manner along with the sender's retrieved CND record 670.

Receiving facsimile device 625, in conjunction with facsimile router 485, receives CND record 670 and extracts the electronic mail address of the sender. Facsimile router 485, in accordance with the invention, enables the conversion of the sender's electronic mail address to an IP address associated with sending facsimile device 605. That is, receiving facsimile device 625 launches an electronic mail message, using server 660 and communication links 680 and 655, respectively, to the sender's electronic mail address. Illustratively, such an electronic mail message is received by server 615, acting as an electronic mail server, and retrieves the predefined auto-response record 675 of the sender which was defined during the initialization of sending facsimile device 605 and includes the IP address associated with sending facsimile device 605. Thus, when the electronic mail message from the receiving facsimile device 625 is received, server 615 in accordance with the sender's auto-response record 675, responds with an electronic mail message over communication links 655 and 645, respectively, to receiving facsimile device 625 which includes the IP address associated with sending facsimile device 605. This electronic message is received and processed by receiving facsimile device 625, in conjunction with facsimile router 485, and a direct IP fax connection is then established by receiving facsimile device 625 with sending facsimile device 605 through Internet 635 which, in accordance with the invention, allows sending facsimile device 605 to begin an immediate transmission of the IP facsimile message to the recipient.

The foregoing merely illustrates the principles of the present invention. Therefore, the invention in its broader aspects is not limited to the specific details shown and described herein. Those skilled in the art will be able to devise numerous arrangements which, although not explicitly shown or described herein, embody those principles and are within their spirit and scope.

## Claims

1. A facsimile apparatus comprising:
a communications unit for processing a call over a communications channel connected to the facsimile apparatus;
a facsimile router for converting a destination address to a Internet Protocol ("IP") address, the IP address corresponding to a particular communications device; and
a control unit for transmitting, over the communications channel, a facsimile message from the facsimile apparatus to the particular communications device as a function of the IP address.

2. The facsimile apparatus of claim 1 wherein the destination address is a telephone number.

3. The facsimile apparatus of claim 1 wherein the destination address is a electronic mail address associated with a user of the particular communications device.

4. The facsimile apparatus of claim 2 wherein the facsimile router converts the telephone number to a electronic mail address associated with a user of the particular communications device to obtain the IP address.

5. A method for routing a facsimile message between a first facsimile device and a second facsimile device, the method comprising:
identifying a destination address of the first facsimile device;
converting the destination address to a IP address associated with the second facsimile device; and
transmitting the facsimile message between the first facsimile and the second facsimile device as a function of the IP address.

6. The method of claim 5 wherein the destination address is a telephone number.

7. The method of claim 6 wherein the converting operation first converts the telephone number to a electronic mail address associated with a user of the second facsimile device and thereafter converts the electronic mail address to the IP address.

8. A facsimile router apparatus comprising:
a receiver for receiving a destination address of a first facsimile machine;
a processor for converting the destination address to a IP address, the IP address being associated with a second facsimile machine; and
a transmitter for transmitting a facsimile message between the first facsimile machine and the second facsimile machine as a function of the IP address.

9. The facsimile router of claim 8 wherein the destination address is a ten digit telephone number.

10. The facsimile router of claim 9 wherein the processor first converts the telephone number to a electronic mail address associated with a user of the second facsimile machine, and thereafter converts the electronic mail address to the IP address.

11. A method of operating a communications system comprising:
extending a call connection between a sending facsimile machine and a receiving facsimile machine, the call connection being extended as a function of a destination address associated with the receiving facsimile machine;
identifying a electronic mail address associated with a user of the sending facsimile machine;
converting the electronic mail address to a IP address associated with the sending facsimile machine;
establishing, as a function of the IP address, a IP connection between the first facsimile machine and the second facsimile machine; and
transmitting, across the IP connection, a IP facsimile message between the sending facsimile machine and the receiving facsimile machine.

12. The method of claim 11 wherein the electronic mail address is identified as a function of a CND record defined by the user of the sending facsimile machine.

13. The method of claim 12 further comprising the operation of transmitting the CND record to the receiving facsimile machine.

14. The method of claim 11 wherein the IP connection is established across a Internet.
